# EUROPEAN PATENT SPECIFICATION

(11) **EP 1 879 183 B1**
(45) Date of publication and mention of the grant of the patent: **24.02.2010**
(21) Application number: 07111913.5
(22) Date of filing: 06.07.2007
(51) Int. Cl.: G11B 5/48

(54) **Head stack assembly and hard disk drive having the same**
Lesekopfanordnung und damit ausgestattetes Festplattenlaufwerk
Ensemble de têtes de lecteur et disque dur équipé d'un tel ensemble

(30) Priority: 13.07.2006 KR 20060065869
(43) Date of publication of application: 16.01.2008
(73) Proprietor: Samsung Electronics Co., Ltd., Suwon-si, Gyeonggi-do (KR)
(72) Inventor: Lee, Haeng-soo, 109-1305, World Meridian Apt., Gyeonggi-do (KR); Kim, Woo-sung, 902-501, Woosung 9-cha Apt., Seoul (KR)
(74) Representative: Grünecker, Kinkeldey, Stockmair & Schwanhäusser Anwaltssozietät

(56) References cited:
- EP-A- 1 560 202
- US-A- 6 154 952
- US-A1- 2002 131 211
- US-A1- 2004 190 203
- US-A1- 2005 063 095

## Description

### BACKGROUND OF THE INVENTION

### 1. Field of the Invention

The present invention relates to a hard disk drive (HDD), and more particularly, to a head stack assembly (HSA) which can reduce the amount of off-track, and an HDD having the HSA.

### 2. Description of the Related Art

An HDD is a supplementary memory device used in personal computers (PCs), MP3 players, mobile phones, etc. which uses a magnetic head to read and write data on a disk. The head is embedded in a head slider, and when the HDD is operating, the head slider floats a predetermined distance above the disk. A head stack assembly (HSA) is attached to the head slider, to support and move the head slider.

The magnetic head embedded in the head slider may deviate from a track due to vibration of the disk or the HSA when the HDD is disturbed or when a spindle motor or the HSA operates; this effect is called off-track.

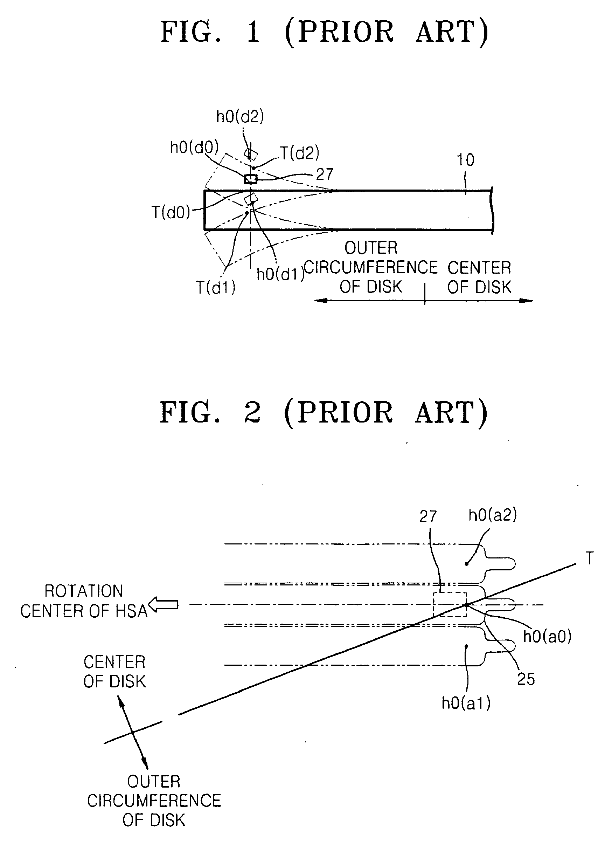

FIG. 1 is a conceptual diagram for describing off-track of a magnetic head due to disk vibration, and FIG. 2 is a conceptual diagram for describing off-track of a magnetic head due to arm bending.

Referring to FIG. 1, when data begins to be written or read, since a magnetic head h0(d0) embedded in a head slider 27 and a specific track T(d0) formed on a concentric circle around the center of a disk 10 are located on a single vertical line and are not separated from each other in a horizontal direction, the amount of off-track of the magnetic head h0(d0) is 0. However, if vibration of a specific frequency is applied to the HDD, the outer circumference of the disk 10 and the head slider 27 of the HSA (not shown) vibrate up and down as illustrated by dotted lines, resulting in off-track, which is called 'off-track due to disk vibration'. In detail, if the disk 10 and the head slider 27 vibrate downwards, the track T(d1) moves towards the outer circumference of the disk 10, whereas the magnetic head h0(d1) moves towards the center of the disk 10, resulting in off-track. However, if the disk 10 and the head slider 27 vibrate upwards, the track T(d2) moves towards the center of the disk 10, whereas the magnetic head h0(d2) moves towards the outer circumference of the disk 10, resulting in off-track.

To reduce the off-track due to disk vibration, an HSA disclosed in US Pat. Nos. 6,920,018 and 6,958,879 has a configuration in which a suspension and a connection plate are attached by a specific bias angle, or a plurality of combination members for connecting the suspension and the connection plate are attached with different heights. The HSA disclosed in this prior art shows a positive effect in reducing the off-track due to disk vibration, since its head slider moves to the outer circumference of the disk if the HSA moves downwards due to torsion of the suspension, and the head slider moves to the center of the disk if the HSA moves upwards due to torsion of the suspension.

However, the HSA disclosed in this prior art shows a negative effect in reducing the off-track due to suspension bending. Referring to FIG. 2, if vibration of a different frequency to that causing the off-track is applied to the HSA disclosed in the prior art, a swing arm (not shown) of the HSA vibrates up and down, and therefore, a suspension 25 and the head slider 27 connected to the swing arm also vibrate up and down, resulting in off-track, which is called 'off-track due to arm bending'. In detail, if the swing arm vibrates upwards, the magnetic head embedded in the head slider 27 moves towards the outer circumference of the disk 10 (from h0(a0) to h0(a1)), resulting in off-track. However, if the swing arm vibrates downwards, the magnetic head embedded in the head slider 27 moves towards the center of the disk 10 (from h0(a0) to h0(a2)), resulting in off-track in the opposite direction. Thus, a method of reducing both the off-track due to disk vibration and the off-track due to arm bending is required.

Document US 2002/131211 A1 discloses a head stack assembly according to the preamble of claims 1 and 6.

### SUMMARY OF THE INVENTION

The present invention provides a head stack assembly (HSA) which can reduce off-track due to disk vibration and off-track due to arm bending, and a hard disk drive (HDD) having the HSA.

According to an aspect of the present invention, there are provided an HSA comprising: a swing arm rotatably assembled with a base member of an HDD; a connection plate assembled with an edge part of the swing arm and biased towards the disk center of the HDD; a suspension having a plurality of combination parts attached to the connection plate, wherein a combination part closer to the disk center is attached to the connection plate in a position lower than that of a combination part further from the disk center; and a head slider, which is a data read/write medium, attached to an edge part of the suspension, and an HDD having the HSA.

The center line of the suspension, which extends in the length direction of the suspension, may be parallel to the center line of the swing arm, which connects the rotation center of the swing arm and the center of the edge part of the swing arm, but be separated from the center line of the swing arm towards the disk center.

The suspension may comprise a load beam having the plurality of combination parts and elastically biasing the head slider towards the disk surface, and a flexure supporting the head slider.

A spacer may be located between at least one combination part and the connection plate in order to form a height difference between the plurality of combination parts.

According to another aspect of the present invention, there are provided an HSA comprising: a swing arm rotatably assembled with a base member of an HDD; a connection plate assembled with an edge part of the swing arm; a suspension attached to the connection plate, biased towards the disk center of the HDD, and having a plurality of combination parts attached to the connection plate, wherein a combination part closer to the disk center is attached to the connection plate in a position lower than that of a combination part further from the disk center; and a head slider, which is a data read/write medium, attached to an edge part of the suspension, and an HDD having the HSA.

The center line of the suspension, which extends in the length direction of the suspension, may be parallel to the center line of the swing arm, which connects the rotation center of the swing arm and the center of the edge part of the swing arm, but be separated from the center line of the swing arm towards the disk center.

A spacer may be located between at least one combination part and the connection plate in order to form a height difference between the plurality of combination parts.

### BRIEF DESCRIPTION OF THE DRAWINGS

The above and other features and advantages of the present invention will become more apparent by describing in detail exemplary embodiments thereof with reference to the attached drawings in which:
FIG. 1 is a conceptual diagram for describing off-track of a magnetic head due to disk vibration;
FIG. 2 is a conceptual diagram for describing off-track of a magnetic head due to arm bending;
FIG. 3 is a plan view of an HDD according to an embodiment of the present invention;
FIGS. 4 and 5 are a perspective view and a plan view showing a closeup of an HSA according to an embodiment of the present invention;
FIG. 6 is a perspective view showing a closeup of an HSA according to another embodiment of the present invention;
FIG. 7 is a perspective view showing a closeup of an HSA according to another embodiment of the present invention;
FIG. 8 is a graph illustrating the correlation between frequency of vibration applied to an HDD and the amount of off-track according to an embodiment of the present invention;
FIG. 9 is a schematic diagram for describing an effect of reducing off-track due to disk vibration in an HSA according to an embodiment of the present invention; and
FIG. 10 is a schematic diagram for describing an effect of reducing off-track due to arm bending in an HSA according to an embodiment of the present invention.

### DETAILED DESCRIPTION OF THE INVENTION

The present invention will now be described more fully with reference to the accompanying drawings, in which exemplary embodiments of the invention are shown.

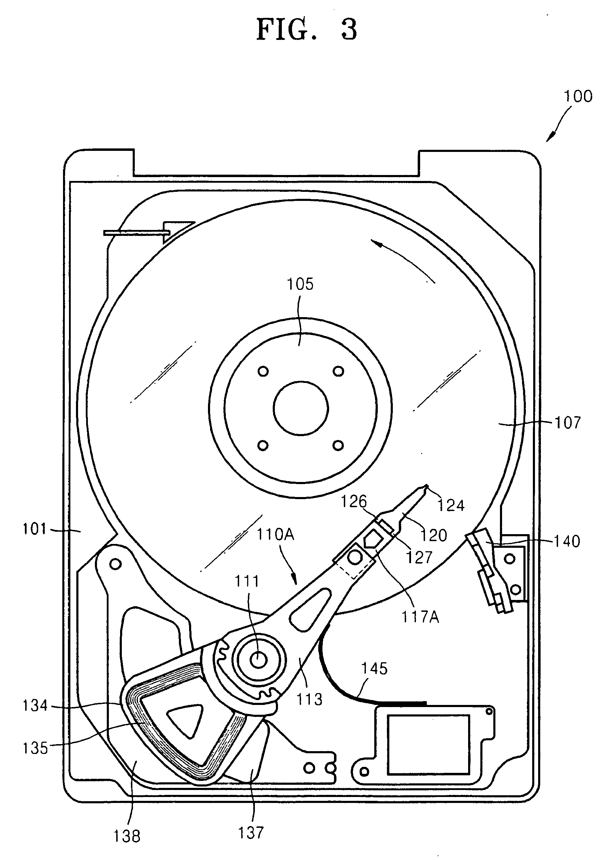

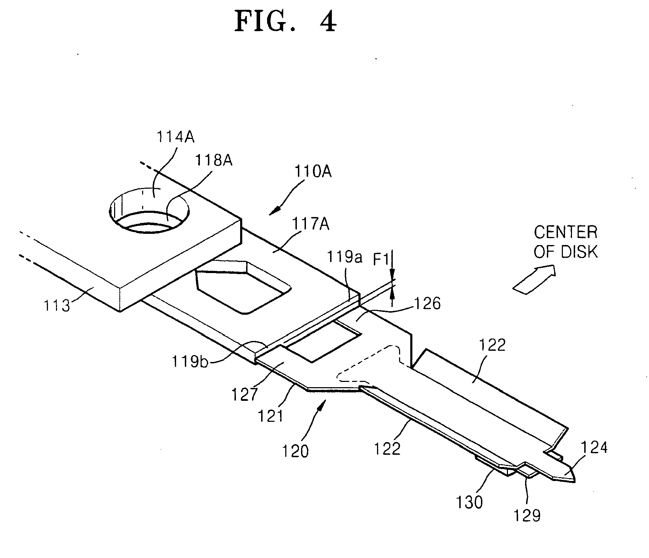

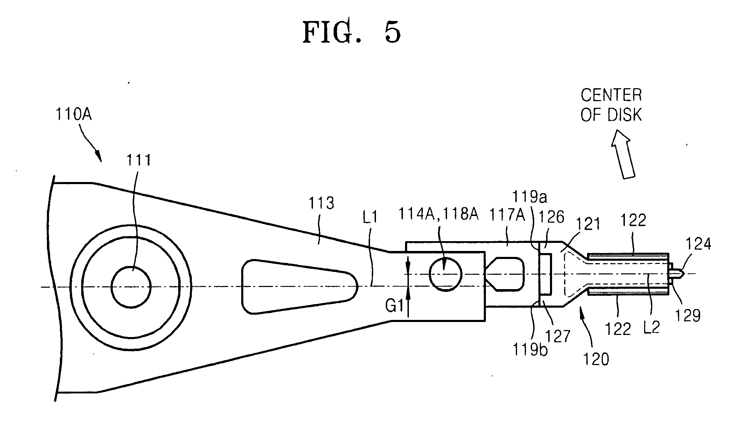

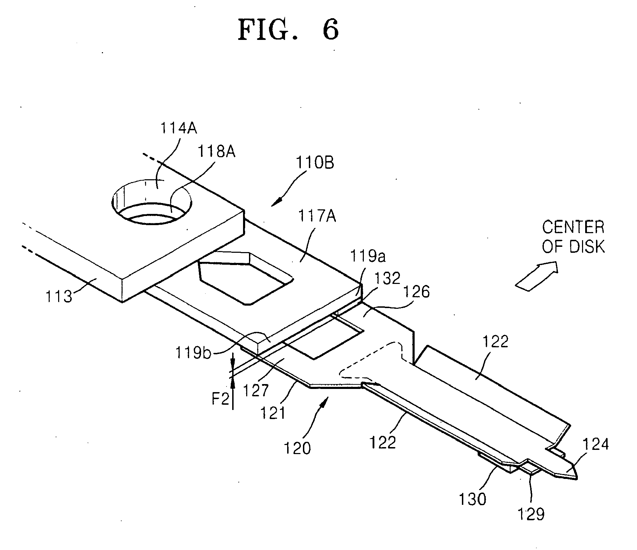

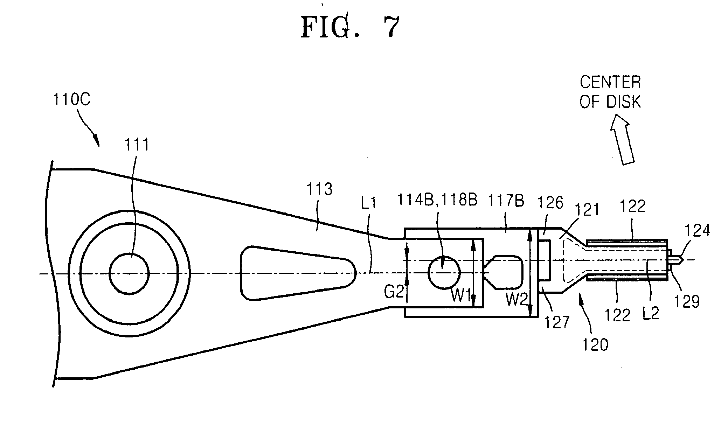

FIG. 3 is a plan view of an HDD 100 according to an embodiment of the present invention, FIGS. 4 and 5 are a perspective view and a plan view showing a closeup of an HSA 110A according to an embodiment of the present invention, FIG. 6 is a perspective view showing a closeup of an HSA 110B according to another embodiment of the present invention, and FIG. 7 is a perspective view showing a closeup of an HSA 110C according to another embodiment of the present invention.

Referring to FIGS. 3 through 5, the HDD 100 includes a spindle motor 105, a disk 107 that is a data storage medium, and the HSA 110A in a housing including a base member 101 and a cover member (not shown) assembled with the base member 101. The spindle motor 105 rotates the disk 107 at a high speed and is fixed to the base member 101. The disk 107 is assembled with the spindle motor 105 and rotates at a high speed in the direction of the arrow. The high-speed rotation induces an air flow in the same direction as the arrow on the surface of the disk 107.

The HSA 110A includes a head slider 130 in which is embedded a magnetic head (not shown) for writing or reading data. The head slider 130 moves to a specific track of the disk 107 and reads or writes data from or to the disk 107. The HSA 110A includes a swing arm 113 rotatably assembled with the base member 101 by a pivot bearing 111, a connection plate 117A assembled with an edge part of the swing arm 113, a suspension 120 attached to the connection plate 117A, and the head slider 130 attached to an edge part of the suspension 120. The HSA 110A also includes an overmold 134, which is assembled with the swing arm 113 and includes a wound voice coil 135.

A magnet 137 and a yoke 138 supporting the magnet 137 are respectively located above and below the overmold 134. The magnet 137, the yoke 138, and the voice coil 135 of the HSA 110A form a voice coil motor and provide a driving force for rotating the HSA 110A.

When the air flow induced by the high-speed rotation of the disk 107 passes between the disk 107 and the head slider 130, lift is exerted on the head slider 130. The head slider 130 floats at a height at which the lift balances the elastic pressure of the suspension 120, which presses the head slider 130 towards the disk 107. While floating, the magnetic head embedded in the head slider 130 reads and writes data from and to the disk 107.

The HDD 100 also includes a flexible printed circuit (FPC) 145, which electrically connects the HSA 110A to a main printed circuit board (PCB (not shown)) below the base member 101, and a ramp 140 for parking the HSA 110A when the HDD 100 stops operating. To park, the HSA 110A rotates clockwise so that the head slider 130 moves away from the disk 107, and an end-tap 124 placed in an edge part of the suspension 120 slides along the slope of the ramp 140, to safely place the HSA 110A in a safety zone. That is, the HSA 110A maintains a fixed state without rotating, regardless of disturbance.

The connection plate 117A of the HSA 110A connects the edge part of the swing arm 113 to the suspension 120. The edge part of the swing arm 113 is assembled with the connection plate 117A by swaging. The edge part of the swing arm 113 and the connection plate 117A respectively include swaging holes 114A and 118A for the swaging assembly.

The suspension 120 includes a load beam 121, which is attached to the connection plate 117A and elastically biases the head slider 130 towards the surface of the disk 107, and a flexure 129, which is attached to the load beam 121 and supports the head slider 130 on the surface of the HSA 110A which faces the disk. The end-tap 124 is placed in an edge part of the load beam 121, and side-rails 122 are formed in the both sides of the load beam 121 to maintain the stiffness of the load beam 121.

The load beam 121 includes a pair of combination parts 126 and 127 attached to the connection plate 117A. The first combination part 126 is attached to a corner 119a of the connection plate 117A, which is closer to the center of the disk 107, and the second combination part 127 is attached to another corner 119b of the connection plate 117A which is further from the center of the disk 107. That is, as illustrated in FIG. 4, the first combination part 126 is attached to the connection plate 117A in a position which is lower than that of the second combination part 127 by a predetermined height difference F1. The height difference F1 is equal to or less than the thickness of the connection plate 117A, and may be between 0 and 0.5 mm.

Referring to FIG. 6, the HSA 110B according to another embodiment of the present invention further includes a spacer 132 located between the first combination part 126 and the lower surface of the connection plate 117A, in order to create a height difference F2 between the first combination part 126 and the second combination part 127. The spacer 132 is attached to the lower surface of the corner 119a of the connection plate 117A, the first combination part 126 is attached to the lower surface of the spacer 132, and the second combination part 127 is attached to the lower surface of the other corner 119b of the connection plate 117A, resulting in the height difference F2.

Although it is not shown, other embodiments of the present invention include creating a height difference between the pair of combination parts 126 and 127 of the suspension 120 attached to the upper surface of the connection plate 117A by placing the spacer 132 between the second combination part 127 and the connection plate 117A, and an HSA having an additional combination part between the first combination part 126 and the second combination part 127.

Referring back to FIGS. 3 through 5, the connection plate 117A is attached to the edge part of the swing arm 113 to be biased towards the center of the disk 107. As illustrated in FIG. 5, if it is assumed that an imaginary line which passes through the rotation center of the swing arm 113, i.e. the center of the pivot bearing 111, and the center of the edge part of the swing arm 113 is a center line L1 of the swing arm 113, and an imaginary line which is the axis of symmetry of the suspension 120 and extends along the length of the suspension 120 is a center line L2 of the suspension 120, then the center line L2 of the suspension 120 is parallel to the center line L1 of the swing arm 113 but separated by a gap G1 towards the center of the disk 107. The gap G1 may be 0 to 2 mm in order to maintain the bonding force between the connection plate 117A and the edge part of the swing arm 113. The centers of the swaging holes 114A and 118A formed in the swing arm 113 and the connection plate 117A are located on the center line L2 of the suspension 120, not on the center line L1 of the swing arm 113, so that the connection plate 117A can be assembled with the edge part of the swing arm 113 and biased towards the center of the disk 107.

Referring to FIG. 7, in the HSA 110C according to another embodiment of the present invention, a connection plate 117B having a width W2 greater than the width W1 of the edge part of the swing arm 113 is assembled with the edge part of the swing arm 113, and the suspension 120 is attached to an edge part of the connection plate 117B and biased towards the center of the disk 107. Thus the center line L2 of the suspension 120 is parallel to the center line L1 of the swing arm 113 but separated by a gap G2 towards the center of the disk 107.

Unlike the HSA 110A illustrated in FIG. 5, in the HSA 110C illustrated in FIG. 7, the connection plate 117B is assembled with the edge part of the swing arm 113 and not biased towards either side of the edge part of the swing arm 113. Thus, the centers of swaging holes 114B and 118B formed in the swing arm 113 and the connection plate 117B are located on the center line L1 of the swing arm 113.

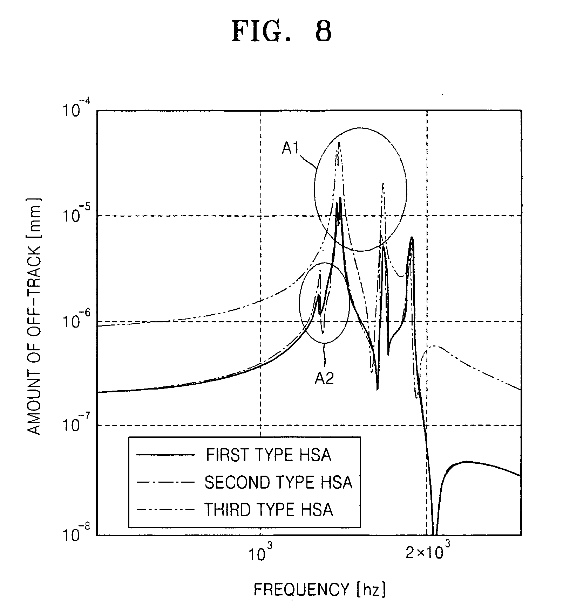

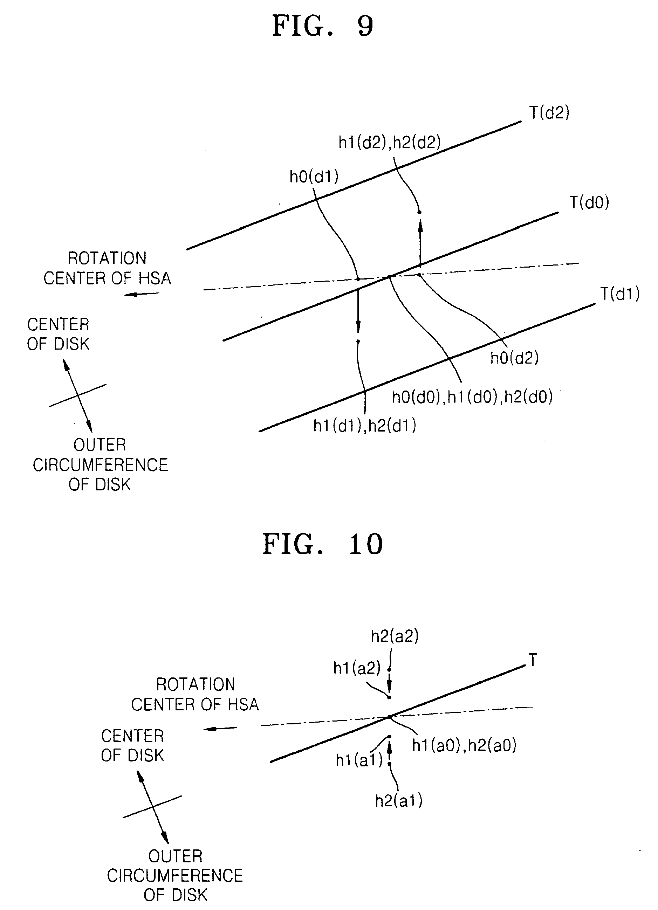

FIG. 8 is a graph illustrating the correlation between frequency of vibration applied to an HDD and the amount of off-track according to an embodiment of the present invention, FIG. 9 is a schematic diagram for describing an effect of reducing off-track due to disk vibration in an HSA according to an embodiment of the present invention, and FIG. 10 is a schematic diagram for describing an effect of reducing the off-track due to arm bending in an HSA according to an embodiment of the present invention.

In order to verify the effect of the present invention, the inventor analyzed the amount of off-track at various frequencies using a computer simulation of an HSA (referring to FIGS. 3 through 5) having both a first characteristic, in which the first combination part 126 is attached to the connection plate 117A in a lower position than the second combination part 127, and a second characteristic, in which the connection plate 117A is assembled with the swing arm 113 so as to be biased towards the center of the disk 107 (hereinafter, a first type HSA); an HSA having only the first characteristic (hereinafter, a second type HSA); and a conventional HSA having neither the first characteristic nor the second characteristic (hereinafter, a third type HSA). In the computer simulation, it was assumed that the HDD has a 2.5-inch diameter disk and the height difference F1 of the first characteristic is 0.1 mm.

Referring to FIG. 8, peaks formed in an A1 zone indicate the occurrence of the off-track due to disk vibration, and a peak formed in an A2 zone indicates the occurrence of the off-track due to arm bending. Table 1 shows an analysis result of FIG. 8.

**[Table 1]**

| | Amount of off-track due to disk vibration [×10⁻⁶ mm] | Amount of off-track due to arm bending [×10⁻⁶ mm] |
|---|---|---|
| First type HSA | 12.80 | 1.69 |
| Second type HSA | 12.47 | 3.09 |
| Third type HSA | 44.29 | |

As illustrated in FIG.8 and Table 1, the first and second type HSAs having the first characteristic have 1/4 the amount of off-track due to disk vibration than the third type HSA. In addition, the first type HSA having both the first characteristic and the second characteristic has 1/2 the amount of off-track due to arm bending than the second type HSA.

Referring to FIG. 9, when a disk (referring to reference numeral 107 of FIG. 3) vibrates up and down, then when the disk moves downwards, a track formed on a concentric circle around the center of the disk moves towards the outer circumference of the disk (from T(d0) to T(d1)), and when the disk moves upwards, the track moves towards the center of the disk (from T(d0) to T(d2)). Also, when the disk moves downwards, a magnetic head embedded in a head slider of the third type HSA moves towards the center of the HSA, i.e. the center of a pivot bearing (referring to reference numeral 111 of FIG. 3), (from h0(d0) to h0(d1)), resulting in off-track due to a distance gap between the magnetic head and the track (between h0(d0) and T(d1)). In addition, when the disk moves upwards, the magnetic head moves away from the center of the HSA (from h0(d0) to h0(d2)), resulting in off-track due to a distance gap between the magnetic head and the track (between h0(d2) and T(d2)).

However, in the first type HSA or the second type HSA having the first characteristic, since distortion of a suspension (referring to reference numeral 120 of FIG. 3) is induced when the HSA vibrates up and down, if the disk moves downwards, a magnetic head embedded in a head slider of the HSA moves to the rotation center of the HSA and is biased towards the outer circumference of the disk (from h1(d0) or h2(d0) to h1(d1) or h2(d1)), and if the disk moves upwards, the magnetic head moves in the opposite direction (from h1(d0) or h2(d0) to h1(d2) or h2(d2)). Thus, the distance between the magnetic head and the track (i.e. between h1(d1) and T(d1) or h1(d2) and T(d2) or h2(d1) and T(d1) or h2(d2) and T(d2)) is shorter than that with the third type HSA, showing that the off-track due to disk vibration is reduced.

Referring to FIG. 10, if arm bending in which an edge part of a swing arm bends upwards occurs in the second type HSA, a magnetic head moves towards the outer circumference of a disk (from h2(a0) to h2(a1)) due to distortion of the suspension caused by the first characteristic, and if arm bending in which the edge part of the swing arm bends downwards occurs in the second type HSA, the magnetic head moves towards the center of the disk (from h2(a0) to h2(a2)). Thus, the distance between the magnetic head and a track (i.e. between h2(a1) and T or h2(a2) and T) is further, resulting in off-track due to arm bending.

However, if arm bending in which an edge part of a swing arm bends upwards occurs in the first type HSA, the second characteristic compensates for the motion of a magnetic head towards the outer circumference of a disk caused by the first characteristic. Thus, compared to the magnetic head of the second type HSA, the magnetic head of the first type HSA deviates from the track T by a smaller amount when the arm bending occurs (from h1(a0) to h1(a1) or from h1(a0) to h1(a2)). Thus, the distance between the magnetic head of the first type HSA and the track (i.e. between h1(a1) and T or h1(a2) and T) is shorter than that in the second type HSA (i.e. between h2(a1) and T or h2(a2) and T). This shows that the off-track due to arm bending is less in the first type HSA according to the present invention, compared to the second type HSA.

As described above, according to the present invention, since off-track in an HSA due to disk vibration and arm bending is reduced, track following performance of a magnetic head is improved, and a Positioning Error Signal (PES) is reduced. In addition, an increase of data processing speed can be expected, and the HDD can use a higher data density with more tracks per inch (TPI).

While the present invention has been particularly shown and described with reference to exemplary embodiments thereof, it will be understood by those of ordinary skill in the art that various changes in form and detail may be made therein without departing from the scope of the present invention as defined by the following claims.

## Claims

1. A head stack assembly (110A, 110B) comprising:
a swing arm (113) configured to be rotatably assembled with a base member (101) of a hard disk drive (100);
a connection plate (117A) assembled with an edge part of the swing arm (113) and biased towards the disk center of the hard disk drive (100);
a suspension (120) having a plurality of combination parts (126, 127) attached to the connection plate (117A); and
a head slider (130) for reading and/or writing data, attached to an edge part of the suspension (120);
**characterized in that**
a combination part (126) closer to the disk center is attached to the connection plate (117A) in a position closer to the disk surface than that of a combination part (127) further from the disk center.

2. The head stack assembly (110A, 110B) of claim 1, wherein the center line (L2) of the suspension (120), which extends in the length direction of the suspension (120), is parallel to the center line (L1) of the swing arm (113), which connects the rotation center of the swing arm (113) and the center of the edge part of the swing arm (113), but is separated from the center line (L1) of the swing arm (113) towards the disk center.

3. The head stack assembly of claim 1 or 2, wherein the suspension (120) comprises:
a load beam (121) having the plurality of combination parts (126, 127) and elastically biasing the head slider (130) towards the disk surface; and
a flexure (129) supporting the head slider (130).

4. The head stack assembly (110A, 110B) of any one of claims 1 to 3, further comprising a spacer (132) located between at least one combination part (126) and the connection plate (117A) in order to form a height difference (F2) between the plurality of combination parts (126, 127).

5. A hard disk drive (100) comprising a base member (101), a disk (107), which is a data storage medium, rotating on the base member (101) at a high speed, and a head stack assembly (110A, 110B) according to any one of claims 1 to 4.

6. A head stack assembly (110C) comprising:
a swing arm (113) configured to be rotatably assembled with a base member (101) of a hard disk drive (100);
a connection plate (117B) assembled with an edge part of the swing arm (113);
a suspension (120) attached to the connection plate (117B), biased towards the disk center of the hard disk drive (100), and having a plurality of combination parts (126, 127) attached to the connection plate (117B); and
a head slider (130) for reading and/or writing data attached to an edge part of the suspension (120);
**characterized in that**
a combination part (126) closer to the disk center is attached to the connection plate (117B) in a position closer to the disk surface than that of a combination part (127) further from the disk center.

7. The head stack assembly (110C) of claim 6, wherein the center line (L2) of the suspension (120), which extends in the length direction of the suspension (120), is parallel to the center line (L1) of the swing arm (113), which connects the rotation center of the swing arm (113) and the center of the edge part of the swing arm (113), but is separated from the center line (L1) of the swing arm (113) towards the disk center.

8. The head stack assembly of claim 6 or 7, further comprising a spacer (132) located between at least one combination part (126) and the connection plate (117B) in order to form a height difference (F2) between the plurality of combination parts (126, 127).

9. A hard disk drive (100) comprising a base member (101), a disk (107) rotating at a high speed on the base member (101) and being a data storage medium, and a head stack assembly (110C) according to any one of claims 6 to 8.

## Patentansprüche

1. Mehrspurkopfanordnung (110A, 110B), umfassend:
einen Schwenkarm (113), der dafür ausgestaltet ist, mit einem Basiselement (101) eines Festplattenlaufwerkes (100) drehbar zusammengebaut zu werden;
eine Verbindungsplatte (117A), die mit einem Kantenteil des Schwenkarmes (113) zusammengebaut und hin zur Plattenmitte des Festplattenlaufwerkes (100) vorgespannt ist;
eine Aufhängung (120), die eine Mehrzahl von Kombinationsteilen (126, 127) aufweist, die an der Verbindungsplatte (117A) angebracht sind; und
einen Lesekopf (130) zum Lesen und/oder Schreiben von Daten, der an einem Kantenteil der Aufhängung (120) angebracht ist;
**dadurch gekennzeichnet, dass**
ein näher an der Plattenmitte befindliches Kombinationsteil (126) an der Verbindungsplatte (117A) in einer Position angebracht ist, die näher an der Plattenoberfläche als diejenige eines weiter weg von der Plattenmitte befindlichen Kombinationsteiles (127) ist.

2. Mehrspurkopfanordnung (110A, 110B) nach Anspruch 1, wobei die Mittellinie (L2) der Aufhängung (120), die sich in der Längenrichtung der Aufhängung (120) erstreckt, parallel zur Mittellinie (L1) des Schwenkarmes (113) ist, die die Drehmitte des Schwenkarmes (113) und die Mitte des Kantenteiles des Schwenkarmes (113) verbindet, jedoch von der Mittellinie (L1) des Schwenkarmes (113) hin zur Plattenmitte getrennt ist.

3. Mehrspurkopfanordnung nach Anspruch 1 oder 2, wobei die Aufhängung (120) umfasst:
einen Lastträger (121), der eine Mehrzahl von Kombinationsteilen (126, 127) aufweist und den Lesekopf (130) elastisch hin zur Plattenoberfläche vorspannt; und
eine Durchbiegung (129), die den Lesekopf (130) stützt.

4. Mehrspurkopfanordnung (110A, 110B) nach einem der Ansprüche 1 bis 3, des Weiteren umfassend ein Abstandsstück (132), das zwischen wenigstens einem Kombinationsteil (126) und der Verbindungsplatte (117A) angeordnet ist, damit ein Höhenunterschied (F2) zwischen der Mehrzahl von Kombinationsteilen (126, 127) gebildet ist.

5. Festplattenlaufwerk (100), umfassend ein Basiselement (101), eine Platte (107), die ein Datenspeichermedium ist und sich an dem Basiselement (101) mit hoher Geschwindigkeit dreht, und eine Mehrspurkopfanordnung (110A, 110B) nach einem der Ansprüche 1 bis 4.

6. Mehrspurkopfanordnung (110C), umfassend:
einen Schwenkarm (113), der dafür ausgestaltet ist, mit einem Basiselement (101) eines Festplattenlaufwerkes (100) drehbar zusammengebaut zu werden;
eine Verbindungsplatte (117B), die mit einem Kantenteil des Schwenkarmes (113) zusammengebaut ist;
eine Aufhängung (120), die an der Verbindungsplatte (117B) mit einer Vorspannung hin zur Plattenmitte des Festplattenlaufwerkes (110) angebracht ist und eine Mehrzahl von Kombinationsteilen (126, 127) aufweist, die an der Verbindungsplatte (117B) angebracht sind; und
einen Lesekopf (130) zum Lesen und/oder Schreiben von Daten, der an einem Kantenteil der Aufhängung (120) angebracht ist;
**dadurch gekennzeichnet, dass**
ein näher an der Plattenmitte befindliches Kombinationsteil (126) an der Verbindungsplatte (117B) in einer Position angebracht ist, die näher an der Plattenoberfläche als diejenige eines weiter weg von der Plattenmitte befindlichen Kombinationsteiles (127) ist.

7. Mehrspurkopfanordnung (110C) nach Anspruch 6, wobei die Mittellinie (L2) der Aufhängung (120), die sich in der Längenrichtung der Aufhängung (120) erstreckt, parallel zur Mittellinie (L1) des Schwenkarmes (113) ist, der die Drehmitte des Schwenkarmes (113) und die Mitte des Kantenteiles des Schwenkarmes (113) verbindet, jedoch von der Mittellinie (L1) des Schwenkarmes (113) hin zur Plattenmitte getrennt ist.

8. Mehrspurkopfanordnung nach Anspruch 6 oder 7, des Weiteren umfassend ein Abstandsstück (132), das zwischen wenigstens einem Kombinationsteil (126) und der Verbindungsplatte (117B) angeordnet ist, damit ein Höhenunterschied (F2) zwischen der Mehrzahl von Kombinationsteilen (126, 127) gebildet ist.

9. Festplattenlaufwerk (100), umfassend ein Basiselement (101), eine Platte (107), die sich mit hoher Geschwindigkeit an dem Basiselement (101) dreht und ein Datenspeichermedium ist, und eine Mehrspurkopfanordnung (110C) nach einem der Ansprüche 6 bis 8.

## Revendications

1. Un ensemble de têtes de lecteur (110A, 110B) comprenant :
un levier pivotant (113) configuré pour être assemblé de manière pivotante avec un membre de base (101) d'un lecteur de disque dur (100) ;
une plaque de connexion (117A) assemblée avec une partie marginale du levier pivotant (113) et biaisée vers le centre du disque du lecteur de disque dur (100) ;
une suspension (120) ayant plusieurs pièces de combinaison (126, 127) attachées à la plaque de connexion (117A) ; et
une pièce coulissante(130) pour lire et/ou écrire des données, attachée à une partie marginale de la suspension (120) ;
**caractérisé par le fait que**
une pièce de combinaison (126) plus proche du centre du disque est attachée à la plaque de connexion (117A) dans une position plus proche de la surface du disque que celle d'une pièce de combinaison (127) plus éloignée du centre du disque.

2. L'ensemble de têtes de lecteur (110A, 110B) selon la revendication 1, où la ligne centrale (L2) de la suspension (120), qui s'étend dans la direction de la longueur de la suspension(120), est parallèle à la ligne centrale (L1) du levier pivotant (113), qui connecte le centre de pivot du levier pivotant (113) et la partie marginale du levier pivotant (113), mais est séparé de la ligne centrale (L1) du levier pivotant (113) vers le centre du disque.

3. L'ensemble de têtes de lecteur selon la revendication 1 ou 2, où la suspension (120) comprend :
un faisceau de charge (121) ayant la pluralité des pièces de combinaison (126, 127) et biaisant élastiquement la pièce coulissante de tête (130) vers la surface du disque ; et une flexure (129) supportant la pièce coulissante de la tête (130).

4. L'ensemble de têtes de lecteur (110A, 110B) de l'une des revendications 1 à 3, comprenant en outre une pièce d'écartement (132) située entre au moins une pièce de combinaison (126) et la plaque de connexion (117A) pour former une différence de hauteur (F2) entre les différentes pièces de combinaison (126,127).

5. Un lecteur de disque dur (100) comprenant un membre de base (101), un disque (107), qui est un moyen de stockage de données, tournant sur le membre de base (101) à une grande vitesse, et un ensemble de têtes de lecteur (110A, 110B) selon l'une des revendications 1 à 4.

6. Un ensemble de têtes de lecteur (110C) comprenant :
un levier pivotant (113) configuré pour être assemblé de manière pivotante avec un membre de base (101) d'un lecteur de disque dur (100) ;
une plaque de connexion (117B) assemblée avec une partie marginale du levier pivotant (113);
une suspension (120) attachée à la plaque de connexion (117B), biaisée vers le centre du disque du lecteur de disque dur (100), et ayant plusieurs pièces de combinaison (126,127) attachées à la plaque de connexion (117B) ; et
une pièce coulissante (130) pour lire et/ou écrire des données attachée à une partie marginale de la suspension (120) ;
**caractérisé par le fait que**
une pièce de combinaison (126) plus proche du centre du disque est attachée à la plaque de connexion (117B) dans une position plus proche de la surface du disque que celle d'une pièce de combinaison (127) plus éloignée du centre du disque.

7. L'ensemble de têtes de lecteur (110C) selon la revendication 6, où la ligne centrale (L2) de la suspension (120), qui s'étend dans la direction de la longueur de la suspension (120), est parallèle à la ligne centrale (L1) du levier pivotant (113), qui connecte le centre de rotation du levier pivotant (113) et le centre de la pièce marginale du levier pivotant (113), mais qui est séparé de la ligne centrale (L1) du levier pivotant (113) vers le centre du disque.

8. L'ensemble de têtes de lecteur selon la revendication 6 ou 7, comprenant en outre une pièce d'écartement (132) située entre au moins une pièce de combinaison (126) et la plaque de connexion (117B) afin de former une différence de hauteur (F2) entre la pluralité des pièces de combinaison (126, 127).

9. Un lecteur de disque dur (100) comprenant un membre de base (101), un disque (107) tournant à une grande vitesse sur le membre de base (101) et étant un moyen de stockage de données, et un ensemble de têtes de lecteur (110C) selon l'une des revendications 6 à 8.
